# EUROPEAN PATENT SPECIFICATION

(11) **EP 2 533 396 B1**
(45) Date of publication and mention of the grant of the patent: **10.01.2018**
(21) Application number: 12170004.1
(22) Date of filing: 30.05.2012
(51) Int. Cl.: H02J 13/00

(54) **MULTI-LEVEL TOPOGRAPHY FOR ELECTRICAL DISTRIBUTION GRID CONTROL**
MEHRSTUFEN-TOPOGRAFIE FÜR ELEKTRISCHE VERTEILUNGSNETZSTEUERUNG
TOPOGRAPHIE À PLUSIEURS NIVEAUX DE COMMANDE POUR RÉSEAU DE DISTRIBUTION ÉLECTRIQUE

(30) Priority: 08.06.2011 US 201113155594
(43) Date of publication of application: 12.12.2012
(73) Proprietor: Alstom Technology Ltd., 5400 Baden (CH)
(72) Inventor: Boardman, Ethan Clair, Seattle, WA 98112 (US); Venkata, Subrahmanyam Saraswati, Oro Valley, AZ 85755 (US)
(74) Representative: Grünecker Patent- und Rechtsanwälte PartG mbB

(56) References cited:
- US-A1- 2005 125 104
- US-B1- 6 347 027
- FREEK BAALBERGEN ET AL: "Outline of a New Hierarchical Agent-Based Voltage Instability Protection System", TRANSMISSION AND DISTRIBUTION CONFERENCE AND EXPOSITION, 2010 IEEE PES, IEEE, PISCATAWAY, NJ, USA, 19 April 2010 (2010-04-19), pages 1-8, XP031689278, ISBN: 978-1-4244-6546-0
- GUPING ZHENG ET AL: "Multi-Agent Based Control System for Multi-Microgrids", COMPUTATIONAL INTELLIGENCE AND SOFTWARE ENGINEERING (CISE), 2010 INTERNATIONAL CONFERENCE ON, IEEE, PISCATAWAY, NJ, USA, 10 December 2010 (2010-12-10), pages 1-4, XP031841252, ISBN: 978-1-4244-5391-7

## Description

### TECHNICAL FIELD

The present application relates generally to electrical distribution grids, and more particularly, to intelligent electrical distribution grids.

### BACKGROUND

Traditional electrical distribution systems have existed relatively uncharged in control topography for many years, due in part to the high cost of altering the infrastructure. More recently, efforts to improve the efficiency and reliability of electrical distribution grids have increased from both private and public interests in electrical distribution systems incorporating intelligent or computerized control systems, e.g., "smart grids". One well-publicized component related to "smart grids" is the smart electrical meter. The smart meter, found at both residential and commercial customers, allows electrical consumption information to be transmitted to a Distribution-level Control Center (DCC.).
An example of a conventional electrical distribution system is described, for instance, in US 2005/0125104 A1.

However, the traditional DCC operates in a flat control topography environment. The data from smart meters and other sensors are typically communicated to the DCC to control the electrical grid. This conventional topography for electrical distribution control systems does not incorporate intermediate levels of data acquisition, processing, and grid control. Where there are ever increasing numbers of smart meters, though, the flat topography becomes problematic. For example, data transmission from millions of smart meters to a single DCC can require large amounts of bandwidth and can be sensitive to communications network fluctuations or faults. In a further example, data consumption at the DCC can be computationally intensive. Issues with the flat control topography, including data transmission and data consumption aspects, can be further magnified where additional smart devices are deployed in the electrical distribution grid, e.g., fault sensors, micro-environmental data, etc.

Additionally, the flat control topography of the traditional electrical distribution system is likely to face hurdles with the incorporation of distributed power generation systems. Many electrical sources in distributed generation systems are time variant. For example, wind turbines are subject to power fluctuation in time based on wind speed, solar power is time variant based on cloud cover; plug-in electrical vehicles with surplus power can be disconnected at a moment's notice, etc. Distributed power generation is likely to introduce a need for high speed adjustments to portions of the electrical distribution system, as close to real time adjustment as possible, and simultaneously be likely to produce a flood of electrical consumption data. In flat control topography, this additional data flow is likely to exacerbate the deficiencies of data throughput and processing. This can result in slower dynamic adjustment of the distribution network where, in fact, faster adjustment is desirable due to the increased demand for processing of such data.

Further, additional sensitivity to communications network faults causes the flat topography control system to become increasingly perilous to grid control and can seriously affect downstream consumers. As more data passes directly to the DCC due to the proliferation of smart devices generating consumable data for grid control, the DCC becomes more dependent on this additional data for proper grid control. Where the DCC is dependent on this increased data flow for proper grid control, even minor diminished bandwidth can impair the flat grid control system by reducing the amount of data accessible for proper control. Hyper-dependable communications systems over an entire distribution grid is desirable for a reliable electrical system, but is burdened under the sheer volume of smart data anticipated in the future electrical grid.

The above-described deficiencies of traditional electrical distribution grids are merely intended to provide an overview of some of the problems of conventional technologies, and are not intended to be exhaustive. Other problems with conventional technologies and corresponding benefits of the various non-limiting embodiments described herein may become further apparent upon review of the following description.

Hierarchical multi-agent control systems for power grids are described in the article "Outline of a new hierarchical agent-based voltage instability protection system" by F. Baalbergen et al. (Proceedings of the 2010 IEEE Transmission and Distribution Conference and Exhibition, June-14, 2010) and in the article "Multi-agent based control system for multi-microgrids" by G. Zheng (Proceedings of the 2010 International Conference on COmputational Intelligence and Software Engineering, December-30, 2010). Due to the hierarchical architecture of these systems, at least some localized problems can be brought under control without involvement of the topmost control level. Conventional hierarchical multi-agent control systems, however, still suffer from bandwidth problems caused by the ever increasing number of smart devices.

Therefore, it is the object of the present invention to provide an electrical distribution control system and method that overcome the above problems.

This is achieved by the features of the independent claims. Preferred embodiments are the subject matter of the dependent claims.

### SUMMARY

The following presents a simplified summary of the disclosed subject matter in order to provide a basic understanding of some aspects of the disclosed subject matter. This summary is not an extensive overview of the subject disclosure. It is intended to neither identify key or critical elements of the subject disclosure nor delineate the scope of the disclosed subject matter. Its sole purpose is to present some concepts of the disclosed subject matter in a simplified form as a prelude to the more detailed description that is presented later.

One or more embodiments of the disclosed subject matter illustrate a multi-level electrical distribution control system associated with an electrical distribution grid. In an aspect, the multi-level control system provides a non-flat topography for electrical distribution grid control. This can provide for closed loop control at each level of the control system, improved reliability of the control system through redundant topographical network structures, and desirable data handling features that can reduce data congestion and computing costs by distributing data handling, processing, and control across the levels of the control system.

In another non-limiting aspect, control and data aspects can be bubbled up and/or pushed down across the various level of a tiered electrical distribution control system. Further, rules engines can facilitate a degree of autonomy to each level of such a control system. This can facilitate features like state-estimation, demand management with various level s of granularity, and distribution reconfiguration, such as, for load balancing in a manner not easily achievable with conventional flat-topography control systems.

In a further non-limiting aspect, the nodal nature of a multi-level control structure facilitates highly flexible distribution grid configurations that can rapidly be adapted to accommodate expansion, reconfiguration, or new technologies. For example, distributed power generation can be quickly incorporated in to an existing electrical grid by including a node controller to manage the electrical grid with respect to the addition of power generation equipment.

To the accomplishment of the foregoing and related ends, the disclosed subject matter, then, comprises the features hereinafter fully described. The following description and the annexed drawings set forth in detail certain illustrative aspects of the disclosed subject matter. However, these aspects are indicative of but a few of the various ways in which the principles of the disclosed subject matter may be employed. Other aspects, advantages and novel features of the disclosed subject matter will become apparent from the following detailed description of the disclosed subject matter when considered in conjunction with the drawings.

### BRIEF DESCRIPTION OF DRAWINGS

FIG. 1 is a block diagram illustrating a system having hierarchical control topography for an electrical distribution network in accordance with aspects of the disclosed subject matter.
FIG. 2 is a block diagram illustrating a system having hierarchical control topography for an electrical distribution network in accordance with aspects of the disclosed subject matter.
FIG. 3 is a block diagram illustrating an exemplary system having hierarchical control topography for an electrical distribution network in accordance with aspects of the disclosed subject matter.
FIG. 4 illustrates a node diagram of a plurality of interconnection topographies and a diagram of an exemplary hierarchical interconnection topography for an electrical distribution grid in accordance with aspects of the disclosed subject matter.
FIG. 5 is a block diagram illustrating a system having hierarchical control topography for an electrical distribution network incorporating distributed electrical sources in accordance with aspects of the disclosed subject matter.
FIG. 6 is a block diagram illustrating a distribution network node controller component for a system having hierarchical control topography in accordance with aspects of the disclosed subject matter.
FIG. 7 is an exemplary flowchart of procedures defining a method facilitating hierarchical control in an electrical distribution network in accordance with aspects of the disclosed subject matter.
FIG. 8 is an exemplary flowchart of procedures defining a method facilitating hierarchical control in an electrical distribution network in accordance with aspects of the disclosed subject matter.
FIG. 9 illustrates a block diagram of a computer operable to execute a portion of the disclosed architecture.
FIG. 10 is a representation of an exemplary electrical grid environment in which the various aspects of the disclosed subject matter can be practiced.

### DETAILED DESCRIPTION

The disclosed subject matter is now described with reference to the drawings, wherein like reference numerals are used to refer to like elements throughout. In the following description, for purposes of explanation, numerous specific details are set forth in order to provide a thorough understanding of the disclosed subject matter. It may be evident, however, that the disclosed subject matter may be practiced without these specific details. In other instances, well-known structures and devices are shown in block diagram form in order to facilitate describing the disclosed subject matter.

Traditional electrical distribution systems employ flat control topographies. While this flat topography was relatively effective where data volumes were relatively limited, the data intensity of future distribution grid technologies is likely to overwhelm flat control . The use of flat control topographies can present significant complications in data acquisition and processing even with relatively limited data volumes.

The use of a multi-level control system, including data acquisition and processing, can offer improvements in the response speed of electrical distribution system, efficiency, and reliability. For example, control data can incorporate data from "health sensors" on electrical line poles to facilitate dynamic rerouting of power around a broken pole, to notify repair crews automatically of worn or damaged poles to allow repair before a catastrophic failure, etc. As another example, as plug-in electric vehicles become more popular, charging these vehicles can be power intensive, especially where several vehicles "coming home from work" attempt to charge simultaneously. Control data relating to high loads at a residential transformer, for example from plugging in several electric cars, can trigger protective action to safeguard the transformer, can push out incentivized charging scheme data to the electrical consumers to lessen the peak power demand, etc.

Additionally, the use of multi-level control systems can be scalable to accommodate ever-increasing data volumes as more electrical distribution system devices become highly computerized and data intensive. For example, additional mid-level components can be included to provide for improved load balancing, such as by shifting load to different phases, directing additional power through alternate nodes in a mesh electrical distribution system, etc. A further example can be the addition of bottom-level components for distributed power generation elements, such as small wind farms, residential geothermal electrical sources, etc.

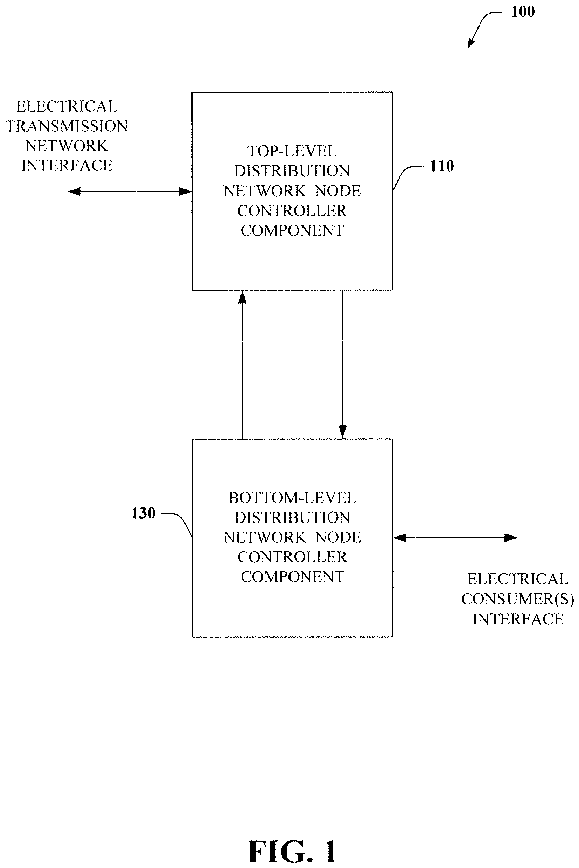

FIG. 1 is a block diagram illustrating a system 100 having hierarchical control topography for an electrical distribution network in accordance with aspects of the disclosed subject matter. System 100 can include top-level distribution network node controller (DNNC) component 110. Top-level DNNC component 110 can be communicatively coupled to bottom-level DNNC component 130. System 100 can provide for hierarchical distribution of control processes including, for example, electrical distribution system data access and acquisition, data processing, or control signaling.

In an aspect, system 100 can emulate traditional flat distribution control center (DCC) topography and as such can be considered "drop-in compatible". This type of compatibility with legacy systems can facilitate the incorporation of multi-level DNNC components to effect an eventual conversion to tiered control topographies. For example, bottom-level DNNC components can be placed in the field and simply pass-through data to an existing DCC.

However, the presently disclosed subject matter provides for non-flat control topographies. As such, continuing the previous example, when the DCC is upgraded to include a top-level DNNC component, tiered control topography functionality can be activated. The bottom-level DNNC component, for example, can monitor signaling from a smart meter for a commercial customer to track energy consumption. A top-level DNNC component, communicatively coupled to the monitoring bottom-level DNNC component, can specify that a signaled be communicated only when the customer consumption is outside of+/-10% of historical consumption. As such, where the customer consumption remains within 10% of their normal usage, data from the smart meter does not need to be transmitted continuously to the top-level DNNC component, in contrast to conventional flat control topography systems. This serves to both reduce needed bandwidth. Further, computing power needed at the DCC is reduced because the continuous flow of data is truncated and thus does not need to be logged or processed at the DCC.

In various non-limiting embodiments, a three-tiered system is described in which a top-level DNNC component, a middle-level DNNC component, and a bottom-level DNNC component are set forth. For the avoidance of doubt, such embodiments can more generally be considered with respect to a first-level DNNC component, a second-level DNNC component and a third-level DNNC component. Such embodiments can also be extended to a fourth-level DNNC component, or fifth-level component, and so on. Further, the terms "parent" or "senior" can indicate a higher level DNNC component and the terms "child" or "junior" can indicate a lower level DNNC component.

In a further aspect, system 100 provides for bidirectional communication between DNNC components, e.g., Top-level DNNC component 110 and bottom-level DNNC component 130, in contrast to conventional flat topography control systems for electrical distribution systems. As disclosed, the use of a multi-level control topography can reduce the amount of data bubbled up to higher level DNNC components. Additionally, the multi-level control topography can facilitate pushing control data down to lower level DNNC components. This can be in the form of direct control, such as a signal from top-level DNNC component 110 to bottom-level DNNC component 130 to shut down, e.g., immediately, to protect itself from overload, etc. This can also be in the form of pushed down control rules or logic, for example, pushing down a rule to activate a second pole transformer and shift load to an alternate phase at 6pm Mon. to Fri. (but not Sat. or Sun.) to anticipate charging of multiple electric vehicles. Further, pushed down rules or logic can include consumer option data or consumer incentive data, for example, a smart panel in a residence can seek rate data from a bottom-level DNNC component and can adjust in-home energy consumption based in part on the rate data made available at a local mode of a multi-level control topography system. A further example of consumer incentivization can include dynamic pricing of power based on demand at a node with fixed throughput. For instance, this may be the case where multiple homes consume power from a pole transformer that can charge only a single vehicle at a time in addition to normal home power consumption. In such case, priority charging can be a premium electrical service, various shared charging schema can be made available (temporal distribution of charging, shared trickle charging, etc.), customers can be given a discount to charge their vehicle at off peak times, etc.

Additionally, multi-level electrical distribution system topography can facilitate distribution grid automation to accept distributed electrical power sources, *e.g*., distributed generation. DNNC components can be adapted to control local and lower-level tasks. For example, a DNNC component can receive a pushed rules package that includes processes associated with micro-generators. As such, where micro-power generation is indicated, the DNNC component at that level can both communicate conditions and data up, and can control the electrical distribution system elements at the same level or lower according to the rules package. For example, where several homes are connected to a transformer associated with a bottom-level DNNC component, e.g., 130, and one of those homes has a large solar array, on a sunny day, the transformer can be directed to disconnect from the grid while the power from the one home is sufficient to power all homes attached to the transformer (and can compute a credit for the solar power supplier). Similarly, on an overcast day, the bottom-level DNNC component can keep the transformer connected to the grid and instruct the smart meter for the home to disconnect from the grid where solar power is sufficient for the solar enabled home. Further, at night, the bottom-level DNNC component can treat the supplied homes related to the node as conventionally powered. It is noted that this local control process is beneficially occurring in real time where distributed generation sources are not constant or fully adequate or where demand fluctuates, such as in the above example where solar power levels may fluctuate between the three exemplary conditions throughout the day or where a customer may be using large power tools such as saws and compressors. As a further example, where a micro-wind turbine is the power source, locally produced, power can vary by the minute or second. This local control frees up the resources of the more senior level DNNC components to control of respectively higher levels of the electrical distribution grid.

In a still further aspect, multi-level electrical distribution system topography can facilitate nodal power balancing. That is, where data is available for a node, rules can be implemented or generated to adapt power consumption in a particular manner. For example, several homes connected to a single transformer associated with a bottom-level DNNC component can access real time consumption data for the other homes and with respect to other grid resources. Privacy rules can be implemented to protect sensitive information. The customers served by the single transformer can then implement a plan to most efficiently use available power. For example, by apportioning peak usage times among the homes such that a first house may desire peak usage between 5pm and 7pm and a second house can accommodate that desire by reducing their consumption during that time period by delaying an activity such as clothes drying until later in the evening or earlier in the day. This local sharing of consumption data can come at little to no computational or bandwidth cost for higher-level DNNC components and systems.

Moreover, data acquisition at the various levels of multi-level control topography can be of various levels of granularity. Not all electrical power grid data sources require fine grain data monitoring, for example, a node associated with a transformer for a future subdivision may have no consumers and as such may need no monitoring (or perhaps minimal health-check type monitoring). In contrast, highly variable power sources, such as wind generators, can be more demanding and may best be served by employing millisecond (msec) data monitoring. To some degree, more data acquisition can result in a faster dynamic response to changes in consumption in an electrical grid and, as such, faster data acquisition is generally preferred. However, where data acquisition comes at some cost, ranking some data tasks more highly than others can result in a more beneficial cost-benefit result for an electrical distribution utility.

Data can be acquired by a variety of sensors associated with a sensor package for a DNNC component or other data sources. This data can be of nearly any type or format. Various data types and formats can be useful in control of electrical distribution systems. For example, data can be related to electrical metrics such as voltage, current, phase, reflectance, resistance, frequency, etc., can be related to environmental conditions such as time, date, temperature, precipitation, wind, lightning, strain measurements, fault measurements, distance, magnetism, etc., can be related to historical data such as previous measurements, patterns of consumption, patterns of generation, etc., can be consumer data such as account identifier, asset identifier, name, address, physical location, email address, phone number, etc., or nearly any other type of data. It is readily appreciated that these data can be stored and manipulated. As examples, a running average power consumption can be generated by averaging historic power usage, data sets can be collected and then compressed to conserve bandwidth where the data is deemed less time sensitive, data can be discarded where it is cumulative, such as a continuously "health" signal from a line sensor, etc.

It is further useful to distinguish between control nodes in multi-level electrical distribution system topography and the electrical distribution grid itself. Control nodes, *e.g*., DNNC components, in multi-level electrical distribution system topography can be physically distinct from the electrical grid itself. In an aspect, control nodes can be logical as opposed to physical, such as where a plurality of components in different physical locations are grouped together to function as a logical control node. For example, a logical control node can comprise a plurality of bottom-level DNNC components each covering part of a single large rural development, that is, the several DNNC components can be communicatively coupled to act as a single logical node to control all power consumption in the large rural development. However, it can be the case that a control node and an electrical grid component can be co-located, such as where a DNNC component is integrated directly into an electrical grid entity, for example, a pole or pad transformer, or where a DNNC component is attached to a an associated electrical grid element. In some cases, a node or DNNC component can be referred to as both a control system node and an electrical grid element, particularly where desirable control points and electrical elements are collocated such as at the edges of a distribution network, for example at a transformer between a primary distribution network and a residential street, *e.g.,* a secondary distribution network. In other cases, the distinct nature of the control node from electrical grid elements is more substantial and where such is the case, such difference is highlighted herein.

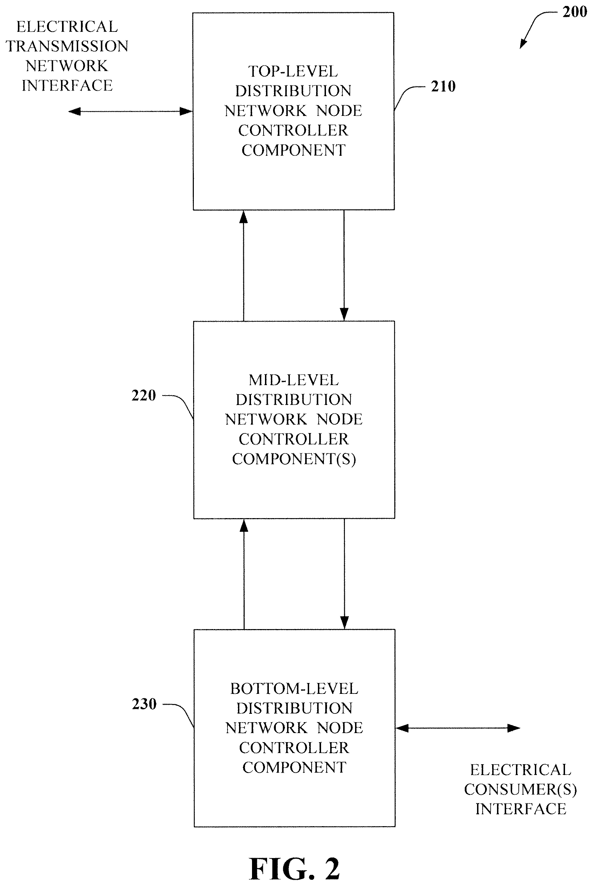

FIG. 2 is a block diagram of a system 200 having hierarchical control topography for an electrical distribution network in accordance with aspects of the disclosed subject matter. System 200 can include top-level DNNC component 210. Top-level DNNC component 210 can be the same as, or similar to, top-level DNNC component 110. System 200 can further include bottom-level DNNC component 230. Bottom-level DNNC component 230 can be the same as, or similar to, bottom-level DNNC component 130. Top-level DNNC component 210 can be communicatively coupled to mid-level DNNC component 220, which can be communicatively coupled to bottom-level DNNC component 230. System 200 can include a plurality of mid-level DNNC components 220 forming a longer chain of DNNC components from top-level DNNC component 210 to bottom-level DNNC component 230.

Mid-level DNNC component 220 can be the same as, or similar to, other DNNC components disclosed herein. Mid-level DNNC component 220 can represent a mid-level logical control node of an electrical distribution system. Typical conventional electrical distribution systems are devoid of any mid-level control elements, with electrical consumption data being transmitted from customer level equipment, e.g., smart meters, to DCC's in flat control topography as disclosed herein in the background section. Mid-level DNNC components, e.g., 220, can be employed to provide control to progressive subsets of the electrical distribution grid control node superset. For example, bottom-level DNNC components can represent small groups of residences on a street, a first mid-level of DNNC components can represent a plurality of bottom-level DNNC components such as an entire street, a second mid-level of DNNC components can represent the entire neighborhood, a 3^{rd} level of DNNC components can represent the entire housing development, a 4^{th} level of DNNC components can represent a region of a city, and the top-level DNNC component can represent an entire city or region.

Mid-level DNNC component 220 can facilitate data bubble up and data push down as disclosed herein for other DNNC components. As such, multiple tiers of data handling can be facilitated to provide a distributed computing environment within the electrical distribution control system. For example, bottom-level DNNC components can process smart meter level data and bubble up aggregated data on power consumption which can be processed by the mid-level DNNC component, *e.g*., 220, to bubble up, for example, load balancing data across a plurality of bottom-level DNNC components. Correspondingly, for example, a top-level DNNC component can push down data to a bottom-level DNNC component to shut down a transformer to accommodate repair work while pushing down rule data to a mid-level DNNC component to implement a new metric for data processing.

In an aspect, mid-level DNNC components, e.g., 220, can accommodate inclusion of distributed power generation systems into an electrical distribution grid (not illustrated). This can be by way of a first dedicated bottom-level DNNC component or directly by way of the mid-level DNNC component. For example, a mid-level DNNC component can interface with a first bottom-level DNNC component related to a wind farm and further the mid-level DNNC component can interface with a second bottom-level DNNC component related to a factory. As a second example, a mid-level DNNC component can interface directly with a wind farm and further the mid-level DNNC component can interface with a first bottom-level DNNC component related to a factory.

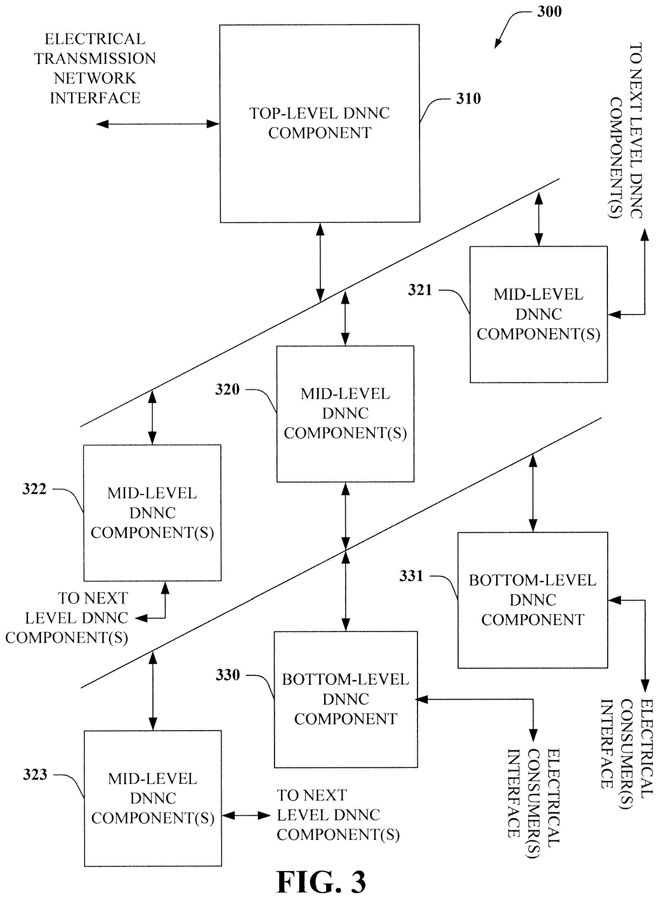

FIG. 3 is a block diagram illustrating an exemplary system 300 having hierarchical control topography for an electrical distribution network in accordance with aspects of the disclosed subject matter. System 300 can be the same as, or similar to, system 100 or 200. System 300 can include top-level DNNC component 310, mid-level DNNC component 320, and bottom-level DNNC component 330, which can be the same as, or similar to, the corresponding components of system 100 or 200.

System 300 is presented as a "tree-structure" electrical distribution control system for ease of explanation. System 300 includes a top-level, a mid-level, and a bottom-level of control. As illustrated, a component at a level can act as a parent node to child nodes of a lower level. As such, top-level DNNC component 310 is illustrated as being a parent controller to three mid-level DNNC controllers 320, 321, 322. Similarly, mid-level DNNC controller 320 is illustrated as being a parent controller to two bottom-level DNNC controllers 330, 331 and another lower mid-level DNNC component 323. As illustrated, control events and data at bottom-level DNNC component 331 can bubble up to mid-level DNNC component 320 and further bubble up to top-level DNNC component 310, and correspondingly be pushed down by the reverse path. The path is similar for control events and data from bottom-layer DNNC component 330. Further DNNC components coupled to mid-level DNNC component 323 would have at least one additional hop in a bubble up or push down path to/from top-level DNNC component 310.

Tree structured control topographies, e.g., as exemplified in system 300, can generally be easily integrated into existing conventional electrical distribution grid systems that frequently also employ a tree structure for delivery of power. However, more modern electrical distribution system schemes or control topographies can employ other structures.

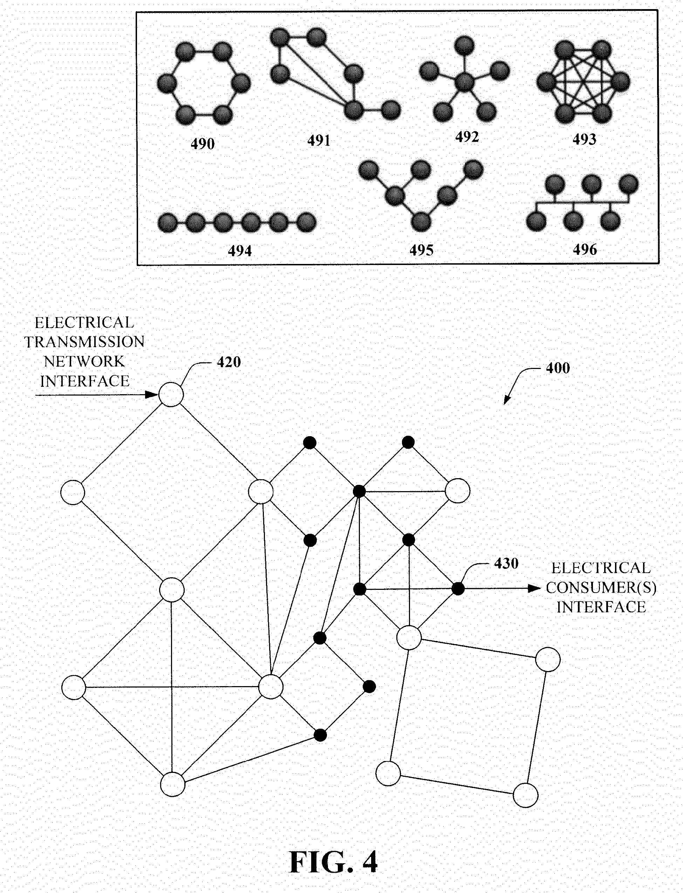

FIG. 4 illustrates a node diagram of a plurality of interconnection topographies and a diagram of an exemplary hierarchical interconnection topography 400 for an electrical distribution grid in accordance with aspects of the disclosed subject matter. Exemplary hierarchical interconnection topography 400 can include a plurality of mid-level DNNC components (open larger circles, e.g., 420) which can be the same as, or similar to, the mid-level DNNC component of systems 200 or 300. Further, exemplary hierarchical interconnection topography 400 can include a plurality of bottom-level DNNC components (solid smaller circles, *e.g.,* 430) which can be the same as, or similar to, the bottom-level DNNC component of systems 100, 200, or 300. For clarity, a top-level DNNC component is not illustrated. Further, for clarity, additional optional senior or junior mid-level DNNC components are not illustrated. The solid lines between DNNC components illustrate communicative pathways between nodes, logical or physical, and can include one or more other components (not illustrated). Further, topography 400 illustrates a mix of several interconnection types (see 490 to 496) and illustrates that control data can be bubbled up or pushed down along one or more network paths between 420 and 430. Further the bubble up and push down can occur on the same or separate network paths. Various metrics can be employed to determine a quality of service (QOS), level of service (LOS), transit time, jitter, or other parameters of the network pathways as will be familiar to one of skill in the art or computer networks. These parameters can therefore be employed to select preferable routes between DNNC components.

Hierarchical control topography for an electrical distribution network can adopt aspects of nodal interconnects as illustrated from 490 to 496. These can be the same as, or similar to, nodal interconnects for computer networks. Interconnect 490 is a ring topography. Interconnect 491 is a mesh topography. Interconnect 492 is a star topography. Interconnect 493 is a fully interconnected topography. Interconnect 494 is a linear topography. Interconnect 495 is a tree topography. Interconnect 496 is a bus topography.

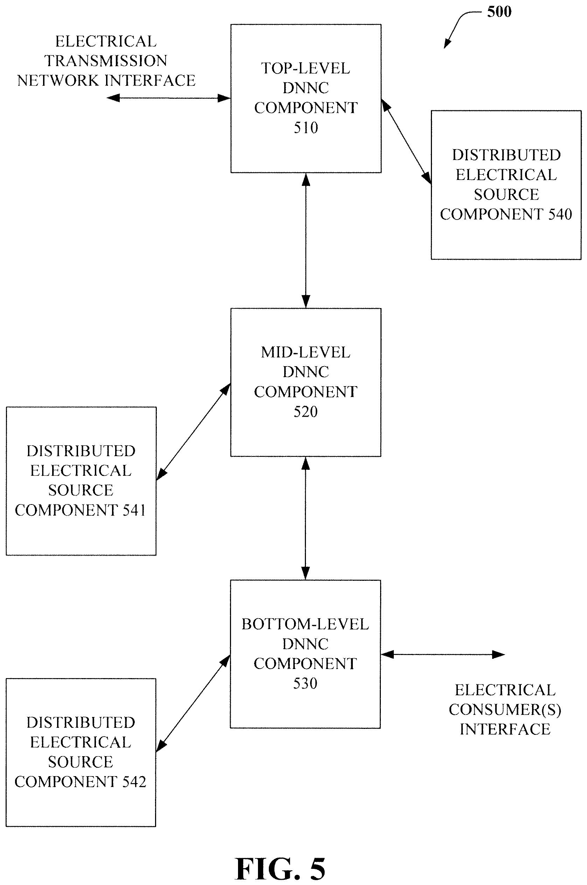

FIG. 5 is a block diagram of a system 500 having hierarchical control topography for an electrical distribution network incorporating distributed electrical sources in accordance with aspects of the disclosed subject matter. System 500 can be the same as, or similar to, system 100, 200, or 300. System 500 can include top-level DNNC component 510, mid-level DNNC component 520, and bottom-level DNNC component 530, which can be the same as, or similar to, the corresponding components of system 100, 200, or 300.

System 500, moreover, can include distributed electrical source components 540, 541, 542. As illustrated, these distributed electrical source (DES) components can be connected to the electrical distribution control system at various levels. Whereas these can be logical representations of topography, the physical location of a source can be independent of the nodal interconnection in Fig. 5. However, for clarity, it is easier to visualize the node and electrical element as collocated such that DES component 540 can be physically connected to a top-level DNNC component 510; DES component 541 can be physically connected to mid-level DNNC component 520; and DES component 542 can be physically connected to bottom-level DNNC component 530.

Further, where the level of control can be related to the actually topography of an electrical distribution system, there can be a correlation between the level and the amount of power at a distribution point. As such, it can be readily appreciated that there can be a difference in the level of power supplied by a DES component related to the level at which it is connected. For example, DES component 542 can be a solar panel or plug in car with surplus power at the residential level such that connection to a bottom-level DNNC component, e.g., 530, can be readily accommodated. Further, by example, DES component 541 can be a small biomass source, such as a methane source at a dairy farm, which connects to a mid-level DNNC component, *e.g.,* 520. As another example, DES component 540 can be a large wind farm or tidal power plant that connects to a top-level DNNC component, *e.g.,* 510. It will be appreciated, however, that there is not any requirement that there be such a correlation or relation.

The use of a non-flat or hierarchical control topography for an electrical distribution system can facilitate the addition of various types and levels of distributed power generation by adding an appropriate DNNC component to a source or routing the source through an existing appropriate DNNC component, either having rules or logic therein for accommodating the type of connected distributed generation. For example, where a bottom-level DNNC component, *e.g.,* 530, includes logic to accommodate surplus power from plug in electric vehicles, e.g., 542, it can be appreciated that, at the end of the workday, plugged in vehicles can actually be a source of power to a group of homes (draining the vehicles further) during a period of above average power demand (dinner time) and then the vehicles can be recharged later in the night when power demand has dropped off (after bedtime).

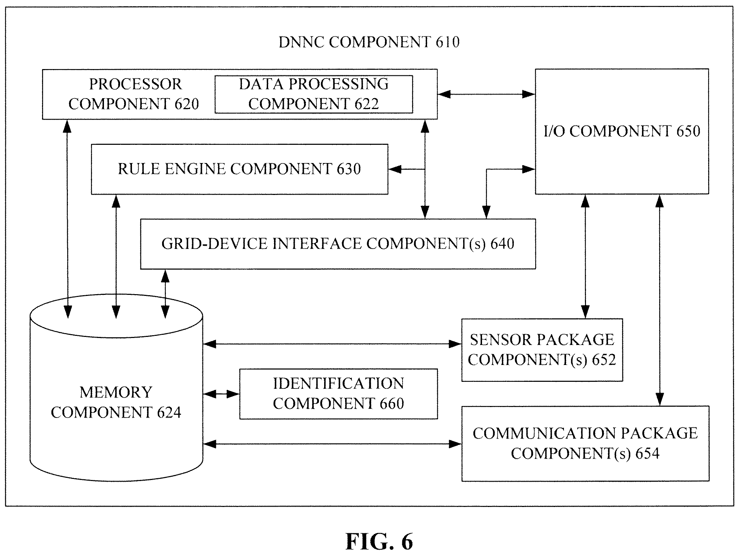

FIG. 6 is a block diagram illustrating a distribution network node controller component 610 for a system having hierarchical control topography in accordance with aspects of the disclosed subject matter. Distribution network node controller component 610 can be the same as, or similar to, the various DNNC components of systems 100, 200, or 300. DNNC component 610 can include a processor component 620 that can be any of various commercially available processors. Processor component 620 can further include a data processing component 622 that can include a dedicated commercially available processor for, or an instruction set for, processing electrical distribution system control data.

DNNC component 610 can further include a memory component 624 that can include one or more of various types of short-term or long-term storage mediums. For example, memory component 624 can include RAM, ROM, Flash, hard disk, optical media, registers, etc. DNNC component 610 can further include rule engine component 630 that is functional to access or generate rules or logic pertaining to the control of electrical distribution systems, which can include data acquisition, data analysis, data processing, decision-making processes, or control of electrical grid components. Moreover, DNNC component 610 can include grid-device interface component(s) 640. Grid-device interface component(s) 640 can be components that are adapted to interact with electric distribution grid devices. For example, grid-device interface component 640 can be a relay driver that is functional to cause automatic switches to open or close, such as those for connecting or disconnecting a transformer to the electrical distribution grid. As a second example, grid-device interface component 640 can be a tuning signal that is functional to dynamic tuning of the power factor to compensate for changes in the loading of an electrical power system element.

Additionally, DNNC component 610 can include an input/output (I/O) component 650. I/O component 650 is operable to allow bidirectional communication with at least one other DNNC component. I/O component 650, further, can be communicatively coupled to sensor package 652 or communication package 654. Sensor package 652 can include signaling interfaces to one or more sensors related to the control of the electric distribution system as disclosed herein. Sensor package 652, for example, can include an interface to a current sensor, a voltage sensor, a phase sensor, a temperature sensor, an anemometer, a strain gauge sensor, a barometer, a fault sensor, a lighting detector, etc. Communications package 654 can include an interface to one or more communication modalities functional to communicate with other DNNC components of an electric distribution system or with other external equipment or devices. For example, communications package 654 can include an 802.11 type radio, a cellular phone type radio, a powerline modulated type communications component, a fiber-optic communications component, etc. Further, DNNC component 610 can include an identification component 660. Identification component 660 can specifically identify the Nth-Level DNNC component 610 within the electrical distribution system. For example, identification component 660 can include radio frequency identification (RFID) component, an internet protocol (IP) address, a globally unique identifier of a predetermined or dynamic size, a geographic information system (GIS) tag, etc.

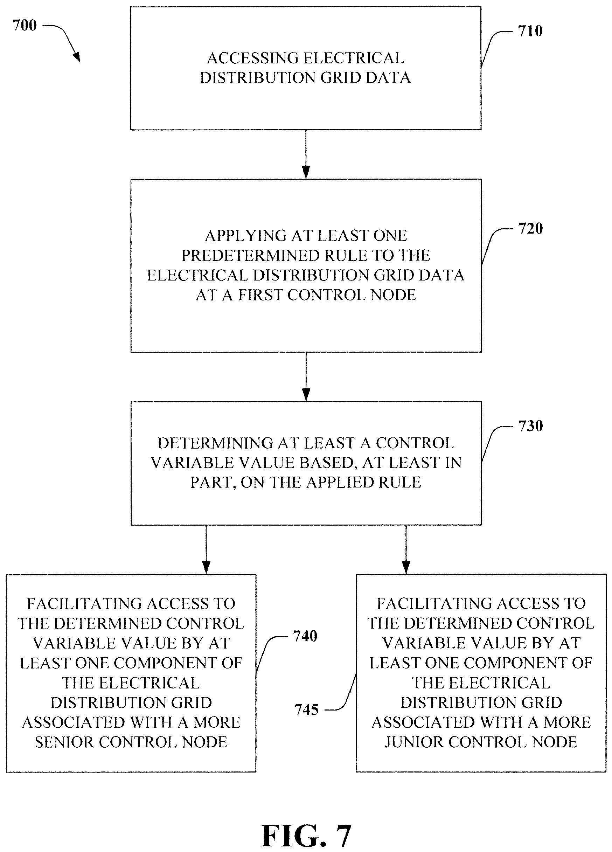

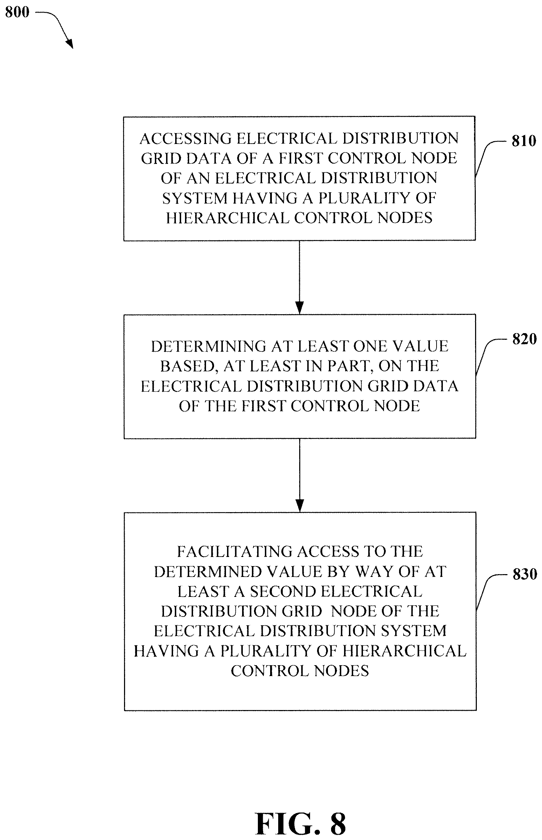

In view of the example system(s) described above, example method(s) that can be implemented in accordance with the disclosed subject matter can be better appreciated with reference to flowcharts in FIG. 7 and 8. For purposes of simplicity of explanation, example methods disclosed herein are presented and described as a series of acts; however, it is to be understood and appreciated that the claimed subject matter is not limited by the order of acts, as some acts may occur in different orders and/or concurrently with other acts from that shown and described herein. For example, one or more example methods disclosed herein could alternatively be represented as a series of interrelated states or events, such as in a state diagram. Moreover, interaction diagram(s) may represent methods in accordance with the disclosed subject matter when disparate entities enact disparate portions of the methodologies. Furthermore, not all illustrated acts may be required to implement a described example method in accordance with the subject specification. Further yet, two or more of the disclosed example methods can be implemented in combination with each other, to accomplish one or more features or advantages herein described. It should be further appreciated that the example methods disclosed throughout the subject specification are capable of being stored on an article of manufacture to allow transporting and transferring such methods to computers for execution, and thus implementation, by a processor or for storage in a memory.

FIG. 7 is exemplary flowchart of procedures defining a method 700 facilitating hierarchical control in an electrical distribution network in accordance with aspects of the disclosed subject matter. At 710, electrical distribution grid data can be accessed. This electrical grid data can be any type of data as herinabove disclosed. At 720, at least one predetermined rule or logic can be applied to the accessed data at a first control node. Rules can be generated by DNNC components of an electrical distribution control system or can be pushed out to selected control nodes through DNNC components. For example, a pricing scheme rule can be pushed out to all control nodes from a corporate server through a top-level DNNC component. As another example, a distribution rule can be generated for electrical customers associated with a bottom-level DNNC component by said DNNC component. The application of these rules and logics to electrical distribution grid data can allow for highly tailored control of the electrical distribution grid in a topographical manner. At 730, a control variable value can be determined from application of the rule at 720.

The determined value at 730 can be employed to affect the control of the electrical distribution grid. At 740, the determined value from 730 can be made accessible to a more senior control node of the electrical distribution control system. At this point method 700 can end. For example, application of an averaging rule at 720 can cause an average power consumption value to be determined at 730, which value can be "bubbled up" to a parent control node. The parent control node can effect control of the electrical distribution grid, for example, increasing a substation transformer tap value to source more power to sections of the electrical distribution grid associated with the first control node as served by assets associated with the parent control node.

Similarly, at 745, the determined value from 730 can be made accessible to a more junior control node of the electrical distribution control system. At this point method 700 can end. For example, application of a distributed generation rule at 720 can cause a threshold value to be determined at 730, which value can be "pushed down" to a child control node. The child control node can effect control of the electrical distribution grid, for example, by disconnecting a pole-transformer from the electrical distribution grid associated with the child control node based on the threshold value to allow sharing of the distributed generation of power without damage to the electrical distribution grid assets.

FIG. 8 is an exemplary flowchart of procedures defining a method 800 facilitating hierarchical control in an electrical distribution network in accordance with aspects of the disclosed subject matter. At 810, electrical distribution grid data can be accessed at a first control node within a hierarchical electrical distribution control system. At 820, a value can be determined based, at least in part, on the data accessed at the first node at 810. At 830, access to the determined value can be facilitated by way of a second node of the electrical distribution control system. At this point method 800 can end.

Method 800 can facilitate multi-route access to values associated with particular control system nodes. Referring to Fig. 4 at 400, the multi-path interconnection of control nodes in an electrical distribution control system can provide alternate or redundant paths to data or determined values. Thus, where at 820 a value is determined for a first node, *e.g.,* 430, any of several alternate routes can access the determined value at 830. As such, method 800 can provide for levels of redundancy in electrical control systems having a hierarchical control node topology.

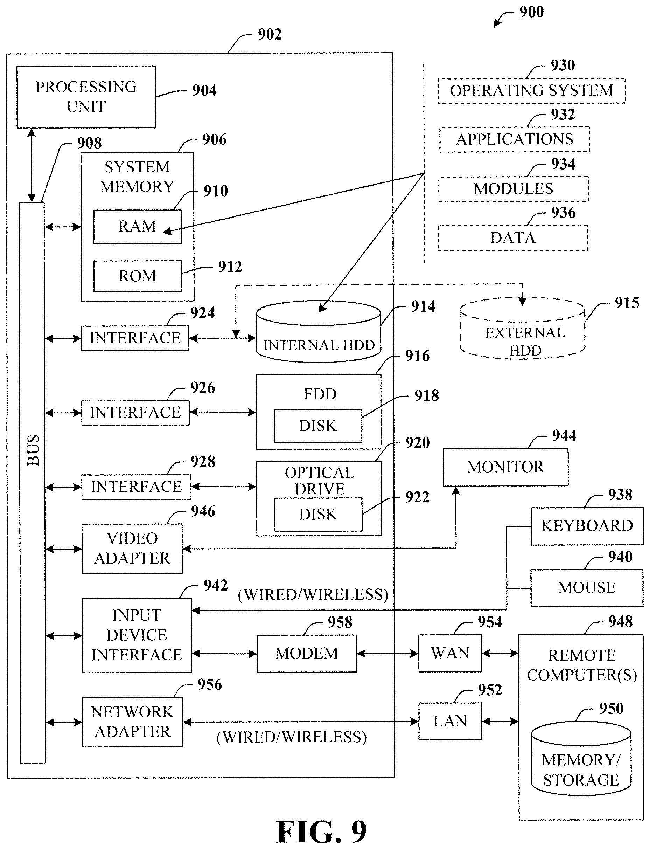

Referring now to FIG. 9, there is illustrated a block diagram of an exemplary computer system operable to execute the disclosed architecture. In order to provide additional context for various aspects of the disclosed subject matter, FIG. 9 and the following discussion are intended to provide a brief, general description of a suitable computing environment 900 in which the various aspects of the disclosed subject matter can be implemented. Additionally, while the disclosed subject matter described above may be suitable for application in the general context of computer-executable instructions that may run on one or more computers, those skilled in the art will recognize that the disclosed subject matter also can be implemented in combination with other program modules and/or as a combination of hardware and software.

Generally, program modules include routines, programs, components, data structures, *etc.,* that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the disclosed subject matter may also be practiced in distributed computing environments where certain tasks are performed by remote processing devices that are linked through a communications network. In a distributed computing environment, program modules can be located in both local and remote memory storage devices. As non-limiting examples, electrical distribution system rules can be accessible by way of the world wide web (Web), on a corporate server, on the top-level DNNC component (e.g., 11, 210, 310, etc.), on a designated Nth-level DNNC component (*e.g,* 610), etc.

Computing devices typically include a variety of media, which can include computer-readable storage media and/or communications media, which two terms are used herein differently from one another as follows. Computer-readable storage media can be any available storage media that can be accessed by the computer and includes both volatile and nonvolatile media, removable and non-removable media. By way of example, and not limitation, computer-readable storage media can be implemented in connection with any method or technology for storage of information such as computer-readable instructions, program modules, structured data, or unstructured data. Computer-readable storage media can include, but are not limited to, RAM, ROM, EEPROM, flash memory or other memory technology, CD ROM, digital versatile disk (DVD) or other optical disk storage, magnetic cassettes, magnetic tape, magnetic disk storage or other magnetic storage devices, or other tangible and/or non-transitory media which can be used to store desired information. Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, *e.g.,* a carrier wave or other transport mechanism, and include any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 9, the exemplary environment 900 for implementing various aspects of the disclosed subject matter includes a computer 902, the computer 902 including a processing unit 904, a system memory 906 and a system bus 908. The system bus 908 couples to system components including, but not limited to, the system memory 906 to the processing unit 904. The processing unit 904 can be any of various commercially available processors. Dual microprocessors and other multi-processor architectures may also be employed as the processing unit 904.

The system bus 908 can be any of several types of bus structure that may further interconnect to a memory bus (with or without a memory controller), a peripheral bus, and a local bus using any of a variety of commercially available bus architectures. The system memory 906 includes read-only memory (ROM) 910 and random access memory (RAM) 912. A basic input/output system (BIOS) is stored in a non-volatile memory 910 such as ROM, EPROM, EEPROM, which BIOS contains the basic routines that help to transfer information between elements within the computer 902, such as during start-up. The RAM 912 can also include a high-speed RAM such as static RAM for caching data.

The computer 902 further includes an internal hard disk drive (HDD) 914, *e.g.,* EIDE, SATA, which internal hard disk drive 914 may also be configured for external use in a suitable chassis, e.g., 915, a magnetic floppy disk drive (FDD) 916, *e.g,* to read from or write to a removable diskette 918, and an optical disk drive 920, *e.g.,* reading a CD-ROM disk 922 or, to read from or write to other high capacity optical media such as the DVD. The hard disk drive 914 (or 915), magnetic disk drive 916 and optical disk drive 920 can be connected to the system bus 908 by a hard disk drive interface 924, a magnetic disk drive interface 926 and an optical drive interface 928, respectively. The interface 924 for external drive implementations includes at least one or both of Universal Serial Bus (USB) and IEEE1394 interface technologies. Other external drive connection technologies are within contemplation of the subject matter disclosed herein.

The drives and their associated computer-readable media provide nonvolatile storage of data, data structures, computer-executable instructions, and so forth. For the computer 902, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the disclosed subject matter.

A number of program modules can be stored in the drives and RAM 912, including an operating system 930, one or more application programs 932, other program modules 934 and program data 936. All or portions of the operating system, applications, modules, and/or data can also be cached in the RAM 912. It is appreciated that the disclosed subject matter can be implemented with various commercially available operating systems or combinations of operating systems.

A user can enter commands and information into the computer 902 through one or more wired/wireless input devices, e.g., a keyboard 938 and a pointing device, such as a mouse 940. Other input devices (not shown) may include a microphone, an IR remote control, a joystick, a game pad, a stylus pen, touch screen, or the like. These and other input devices are often connected to the processing unit 904 through an input device interface 942 that is coupled to the system bus 908, but can be connected by other interfaces, such as a parallel port, an IEEE1394 serial port, a game port, a USB port, an IR interface, *etc.*

A monitor 944 or other type of display device is also connected to the system bus 908 *via* an interface, such as a video adapter 946. In addition to the monitor 944, a computer typically includes other peripheral output devices (not shown), such as speakers, printers, *etc.*

The computer 902 may operate in a networked environment using logical connections *via* wired and/or wireless communications to one or more remote computers, such as a remote computer(s) 948. For example, powerline type communications can allow control nodes of an electrical distribution system to share information. As a second example, cellular type communications can be employed as per the discussion with regard to Fig. 6, hereinabove. The remote computer(s) 948 can be a workstation, a server computer, a router, a personal computer, a mobile device, portable computer, microprocessor-based entertainment appliance, a peer device or other common network node, and typically includes many or all of the elements described relative to the computer 902, although, for purposes of brevity, only a memory/storage device 950 is illustrated. The logical connections depicted include wired/wireless connectivity to a local area network (LAN) 952 and/or larger networks, e.g., a wide area network (WAN) 954. Such LAN and WAN networking environments are commonplace in offices and companies, and facilitate enterprise-wide computer networks, such as intranets, all of which may connect to a global communications network, e.g., the Internet.

When used in a LAN networking environment, the computer 902 is connected to the local network 952 through a wired and/or wireless communication network interface or adapter 956. The adapter 956 may facilitate wired or wireless communication to the LAN 952, which may also include a wireless access point disposed thereon for communicating with the wireless adapter 956.

When used in a WAN networking environment, the computer 902 can include a modem 958, or is connected to a communications server on the WAN 954, or has other means for establishing communications over the WAN 954, such as by way of the Internet. The modem 958, which can be internal or external and a wired or wireless device, is connected to the system bus 908 *via* the serial port interface 942. In a networked environment, program modules depicted relative to the computer 902, or portions thereof, can be stored in the remote memory/storage device 950. It will be appreciated that the network connections shown are exemplary and other means of establishing a communications link between the computers can be used.

The computer 902 is operable to communicate with any wireless devices or entities operatively disposed in wireless communication, *e.g.,* a printer, scanner, desktop and/or portable computer, portable data assistant, communications satellite, any piece of equipment or location associated with a wirelessly detectable tag, *e.g.,* a kiosk, news stand, restroom, etc., and telephone. This includes at least Wi-Fi and Bluetooth™ wireless technologies. Thus, the communication can be a predefined structure as with a conventional network or simply an ad hoc communication between at least two devices.

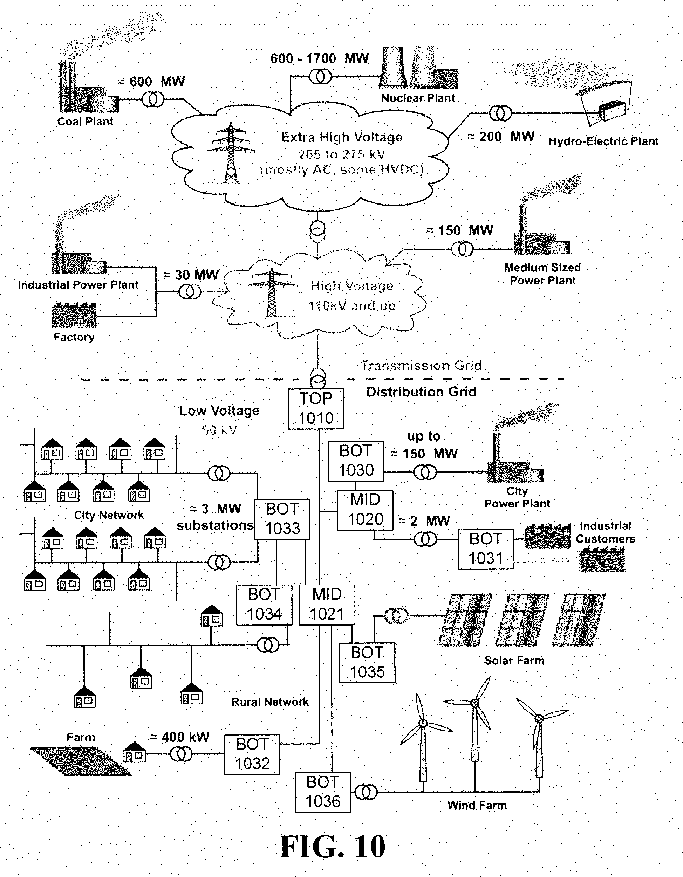

FIG. 10 is a representation of an exemplary electrical grid environment in which the various aspects of the disclosed subject matter can be practiced. It is to be appreciated that this figure and the associated disclosure is presented as a non-limiting example to facilitate a general comprehension of one or more aspects of the disclosed subject matter in connection with hypothetical electrical grid assets. Further, while sample values and assets are illustrated for context, these same sample values and assets are non-limiting and should not be viewed as defining any narrowing of scope. Generally, the assets of Fig. 10 can be assigned to a transmission grid portion (upper portion of figure) or a distribution grid portion (lower portion of figure) as is typical in many electrical grids worldwide. Transmission systems often are associated with very high AC voltages or even DC transmission of power. Transmission systems are generally presented in the context of delivering high power to regional distribution networks managed by a distribution grid entity.

The conventional electrical distribution grid, as disclosed herein, generally has a flat control structure with control being centralized in a distribution control center (DCC). In contrast, as illustrated in Fig. 10, non-flat control topography can be employed in accord with the subject matter disclosed herein. In this non-limiting example, three tiers of electrical distribution control system components are illustrated. A top-level DNNC component 1010 can be communicatively coupled to junior level DNNC components (e.g., 1020 to 1036). In Fig. 10, the interconnections illustrate a basic tree structure topology as disclosed herein above with regard to Fig. 4.

In an aspect, two mid-level DNNC components 1020 and 1021 are logically placed between the bottom-level DNNC components and the top-level DNNC component 1010. Further, the several bottom-level DNNC components (*e.g.,* 1030 to 1036) can be associated with various edge assets. For example, bottom-level DNNC component 1030 can be associated with a city power plant and bottom-level DNNC component 1031 can be associated with a small group of industrial customers. Bottom-level DNNC component 1030 and 1031 can be logically connected to top-level DNNC component 1010 by way of mid-level DNNC component 1020. As such, data and rules can be bubble up or pushed down by way of this path. The bidirectional communication and closed loop control at each level (*e.g.,* top, mid, and bottom) can facilitate improved electrical distribution grid performance. For example, where additional power is needed by the industrial customers associated with bottom-level DNNC component 1031, control signals from mid-level DNNC component 1020 can source more power from city power plant by way of bottom-level DNNC component 1030 without directly involving the top-level DNNC component 1010 or draining energy from the illustrated solar farm or wind farm.

Similarly, mid-level DNNC component 1021 can be associated with bottom-level DNNC components 1032 to 1036. Bottom-level DNNC component 1033 for example can be logically associated with a plurality of transformers service a portion of a city network. Further, for example, bottom-level DNNC component 1034 can be associated with a single transformer as part of a rural network. Moreover, at bottom-level DNNC component 1032, for example, the DNNC component can be associated with a single consumer such as the farm. DNNC components can also be associated with distributed power generation, for example bottom-level DNNC component 1035 associated with a solar farm and bottom-level DNNC component 1036 associated with a wind farm. As such, bidirectional communication between top-level DNNC component 1010 and bottom-level DNNC components 1032-1036 can be by way of mid-level DNNC component 1021. As such, rules propagated for mid-level DNNC component 1020 and associate child DNNC components can be different from rules propagated for mid-level DNNC component 1021 and associated child DNNC components. Further, independent closed loop control can be effected, for example, at bottom-level DNNC component 1034 and the associated rural customers without impacting bottom-level DNNC component 1033 and the associated city network.

As used in this application, the terms "component," "system," "platform," "layer," "selector," "interface," and the like are intended to refer to a computer-related entity or an entity related to an operational apparatus with one or more specific functionalities, wherein the entity can be either hardware, a combination of hardware and software, software, or software in execution. As an example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. In addition, these components can execute from various computer readable media having various data structures stored thereon. The components may communicate via local and/or remote processes such as in accordance with a signal having one or more data packets, e.g., data from one component interacting with another component in a local system, distributed system, and/or across a network such as the Internet with other systems *via* the signal. As another example, a component can be an apparatus with specific functionality provided by mechanical parts operated by electric or electronic circuitry, which is operated by software or firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that confers at least in part the functionality of the electronic components.

Moreover, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

Furthermore, the terms "user," "subscriber," "customer," "consumer," "prosumer," "agent," and the like are employed interchangeably throughout the subject specification, unless context warrants particular distinction(s) among the terms. It should be appreciated that such terms can refer to human entities or automated components supported through artificial intelligence, e.g., a capacity to make inference based on complex mathematical formalisms, which can provide simulated vision, sound recognition and so forth.

As used herein, the terms "infer" or "inference" generally refer to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, e.g., computers, to send and receive data indoors and out; anywhere within the range of a base station. Wi-Fi networks use radio technologies called IEEE802.11 (a, b, g, n, *etc*.) to provide secure, reliable, fast wireless connectivity. A Wi-Fi network can be used to connect computers to each other, to the Internet, and to wired networks (which use IEEE802.3 or Ethernet). Wi-Fi networks operate in the unlicensed 2.4 and 5 GHz radio bands, at an 11 Mbps (802.11b) or 54 Mbps (802.11a) data rate, for example, or with products that contain both bands (dual band), so the networks can provide real-world performance similar to the basic "10BaseT" wired Ethernet networks used in many offices.

Various aspects or features described herein can be implemented as a method, apparatus, or article of manufacture using standard programming and/or engineering techniques. In addition, various aspects disclosed in the subject specification can also be implemented through program modules stored in a memory and executed by a processor, or other combination of hardware and software, or hardware and firmware. The term "article of manufacture" as used herein is intended to encompass a computer program accessible from any computer-readable device, carrier, or media. For example, computer readable media can include but are not limited to magnetic storage devices, *e.g.,* hard disk, floppy disk, magnetic strips, etc., optical disks, e.g., compact disc (CD), digital versatile disc (DVD), blu-ray disc (BD), etc., smart cards, and flash memory devices, *e.g.,* card, stick, key drive, etc. Additionally it should be appreciated that a carrier wave can be employed to carry computer-readable electronic data such as those used in transmitting and receiving electronic mail or in accessing a network such as the internet or a local area network (LAN). Of course, those skilled in the art will recognize many modifications may be made to this configuration without departing from the scope or spirit of the disclosed subject matter.

As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor also can be implemented as a combination of computing processing units.

In the subject specification, terms such as "store," "data store," "data storage," "database," "depository," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory. In addition, memory components or memory elements can be removable or stationary. Moreover, memory can be internal or external to a device or component, or removable or stationary. Memory can include various types of media that are readable by a computer, such as hard-disc drives, zip drives, magnetic cassettes, flash memory cards or other types of memory cards, cartridges, or the like.

By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

What has been described above includes examples of the various embodiments. It is, of course, not possible to describe every conceivable combination of components or methodologies for purposes of describing the embodiments, but one of ordinary skill in the art may recognize that many further combinations and permutations are possible.

In particular and in regard to the various functions performed by the above described components, devices, circuits, systems and the like, the terms (including a reference to a "mean") used to describe such components are intended to correspond, unless otherwise indicated, to any component which performs the specified function of the described component, *e.g.,* a functional equivalent, even though not structurally equivalent to the disclosed structure, which performs the function in the herein illustrated exemplary aspects of the embodiments. In this regard, it will also be recognized that the embodiments includes a system as well as a computer-readable medium having computer-executable instructions for performing the acts and/or events of the various methods.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. An electrical distribution control system associated with an electrical distribution grid, the electrical distribution control system comprising:
first, second, and third distribution network node controller, DNNC, components (210, 220, 230) arranged in a non-flat control topography,
the first DNNC component (210) configured to communicate with the second DNNC component (220), with the third DNNC component (230), and with at least an electrical distribution grid component to dynamically control at least a portion of the electrical distribution grid,
the second DNNC component (220) configured to communicate with the first DNNC component (210), with the third DNNC component (230), and with at least an electrical distribution grid component to effect dynamic control of at least a portion of the electrical distribution grid,
the second DNNC component (220) further configured to process data received from the third DNNC component (230) on the basis of data received from the first DNNC component (210) and to transmit the processed data to the first DNNC component (210).

2. The system of claim 1, wherein the second DNNC component (220) is configured to be communicatively interposed between the first and the third DNNC components (210, 230), wherein the first DNNC component (210) communicates with the third DNNC component (230) by way of the second DNNC component (220).

3. The system of claim 2, wherein the first DNNC component (210) is further configured to communicate with a fourth DNNC component communicatively coupled to the second or third DNNC components (220, 230), the fourth DNNC further configured to communicate with at least an electrical distribution grid component to effect dynamic control of at least a portion of the electrical distribution grid.

4. The system of claim 3, wherein the first DNNC component (210) is further configured to communicate with other DNNC components, including the second, third or fourth DNNC components (220, 230), arranged, at least in part, according to a tree structure topology.

5. The system of claim 3, wherein the first DNNC component (210) is further configured to communicate with other DNNC components, including the second, third or fourth DNNC components (220, 230), arranged, at least in part, according to a mesh structure topology.

6. The system of claim 3, wherein at least one DNNC component of the first, second, third or fourth DNNC components further comprises:
a processor component (620); and
a sensor package component (652), wherein the processor component and the sensor package component are communicatively coupled and, at least in part, configured to access electrical distribution grid data.

7. The system of claim 3, wherein at least one DNNC component of the first, second, third or fourth DNNC components further comprises:
an input-output component (650) communicatively coupled to a communication package component configured to effect communication by at least one predetermined communication modality facilitating communication between any two or more DNNC components.

8. The system of claim 3, wherein at least one DNNC component of the first, second, third or fourth DNNC components further comprise:
a grid-device interface component (640) configured to support interaction with at least one electrical distribution grid component facilitating control of at least a portion of the electrical distribution grid.

9. The system of claim 1, wherein
the second DNNC component is further configured to access electrical distribution grid data, apply at least one predetermined rule to the electrical distribution grid data, and determine a value based, at least in part, on the at least one predetermined rule and the electrical distribution grid data; and
the first DNNC component is further configured to access the value.

10. The system of claim 1, wherein a plurality of DNNC components, including the first and second DNNC components, are configured to communicate by way of a topographical system of interconnects forming a network of DNNC components including at least one communications path from the first DNNC component to the second DNNC component traversing at least a portion of the network.

11. A method for controlling an electrical distribution grid, said method comprising:
providing first, second, and third distribution network node controller, DNNC, components (210, 220, 230) arranged in a non-flat control topography,
the first DNNC component (210) being configured to communicate with the second DNNC component (220), with the third DNNC component (230), and with at least an electrical distribution grid component to dynamically control at least a portion of the electrical distribution grid,
the second DNNC component (220) being configured to communicate with the first DNNC component (210), with the third DNNC component (230), and with at least an electrical distribution grid component to effect dynamic control of at least a portion of the electrical distribution grid,
receiving, at the second DNNC component (220), data from the first DNNC component (210) and data from the third DNNC component (230);
processing, at the second DNNC component (220), the data received from the third DNNC component (230) on the basis of the data received from the first DNNC component (210); and
transmit the processed data from the second DNNC component (220) to the first DNNC component (210).

12. The method of claim 11, wherein the first DNNC component, the second DNNC component (220), and the third DNNC component (230) are arranged in a hierarchical control node structure, and the second DNNC component (220) is a parent of the third DNNC component (230).

13. The method of claim 11, wherein the first DNNC component (210), the second DNNC component (220), and the third DNNC component (230) are arranged in a hierarchical control node structure, and the second DNNC component (220) is a child of the first DNNC component (210).

## Patentansprüche

1. Stromverteilungssteuersystem, das einem Stromverteilungsnetz zugehörig ist, wobei das Stromverteilungssteuersystem umfasst:
eine erste, zweite und dritte Verteilungsnetzknotensteuerungskomponente (Distribution Network Node Controller, DNNC) (210, 220, 230), die in einer nicht flachen Steuertopographie angeordnet sind,
wobei die erste DNNC-Komponente (210) dazu konfiguriert ist, mit der zweiten DNNC-Komponente (220), mit der dritten DNNC-Komponente (230) und mit mindestens einer Stromverteilungsnetzkomponente zu kommunizieren, um zumindest einen Teil des Stromverteilungsnetzes dynamisch zu steuern,
wobei die zweite DNNC-Komponente (220) dazu konfiguriert ist, mit der ersten DNNC-Komponente (210), mit der dritten DNNC-Komponente (230) und mit mindestens einer Stromverteilungsnetzkomponente zu kommunizieren, um die dynamische Steuerung von zumindest einem Teil des Stromverteilungsnetzes zu bewirken,
wobei die zweite DNNC-Komponente (220) des Weiteren dazu konfiguriert ist, Daten, die von der dritten DNNC-Komponente (230) empfangen werden, auf der Basis von Daten zu verarbeiten, die von der ersten DNNC-Komponente (210) empfangen werden, und die verarbeiteten Daten an die erste DNNC-Komponente (210) zu übertragen.

2. System nach Anspruch 1, wobei die zweite DNNC-Komponente (220) dazu konfiguriert ist, kommunikativ zwischen der ersten und der dritten DNNC-Komponente (210, 230) angeordnet zu werden, wobei die erste DNNC-Komponente (210) mit der dritten DNNC-Komponente (230) über die zweite DNNC-Komponente (220) kommuniziert.

3. System nach Anspruch 2, wobei die erste DNNC-Komponente (210) des Weiteren dazu konfiguriert ist, mit einer vierten DNNC-Komponente zu kommunizieren, die kommunikativ mit der zweiten oder dritten DNNC-Komponente (220, 230) verbunden ist, wobei die vierte DNNC-Komponente des Weiteren dazu konfiguriert ist, mit mindestens einer Stromverteilungsnetzkomponente zu kommunizieren, um die dynamische Steuerung von zumindest einem Teil des Stromverteilungsnetzes zu bewirken.

4. System nach Anspruch 3, wobei die erste DNNC-Komponente (210) des Weiteren dazu konfiguriert ist, mit anderen DNNC-Komponenten zu kommunizieren, darunter die zweite, dritte oder vierte DNNC-Komponente (220, 230), die zumindest zum Teil gemäß einer Baumstrukturtopologie angeordnet sind.

5. System nach Anspruch 3, wobei die erste DNNC-Komponente (210) des Weiteren dazu konfiguriert ist, mit anderen DNNC-Komponenten zu kommunizieren, darunter die zweite, dritte oder vierte DNNC-Komponente (220, 230), die zumindest zum Teil gemäß einer Maschentopologie angeordnet sind.

6. System nach Anspruch 3, wobei mindestens eine DNNC-Komponente aus der ersten, zweiten, dritten oder vierten DNNC-Komponente des Weiteren umfasst:
eine Prozessorkomponente (620); und
eine Sensorbausteinkomponente (652), wobei die Prozessorkomponente und die Sensorbausteinkomponente kommunikativ verbunden und zumindest zum Teil dazu konfiguriert sind, auf Stromverteilungsnetzdaten zuzugreifen.

7. System nach Anspruch 3, wobei mindestens eine DNNC-Komponente aus der ersten, zweiten, dritten oder vierten DNNC-Komponente des Weiteren umfasst:
eine Eingangs-Ausgangs-Komponente (650), die kommunikativ mit einer Kommunikationsbausteinkomponente verbunden ist, welche dazu konfiguriert ist Kommunikation durch zumindest eine vorgegebene Kommunikationsmodalität zu bewirken, welche die Kommunikation zwischen zwei oder mehr DNNC-Komponenten ermöglicht.

8. System nach Anspruch 3, wobei mindestens eine DNNC-Komponente aus der ersten, zweiten, dritten oder vierten DNNC-Komponente des Weiteren umfasst:
eine Netz-Vorrichtungs-Schnittstellenkomponente (640), die dazu konfiguriert ist, Interaktion mit mindestens einer Stromverteilungsnetzkomponente zu unterstützen, welche die Steuerung von zumindest einem Teil des Stromverteilungsnetzes ermöglicht.

9. System nach Anspruch 1, wobei
die zweite DNNC-Komponente des Weiteren dazu konfiguriert ist, auf Stromverteilungsnetzdaten zuzugreifen, mindestens eine vorgegebene Regel auf die Stromverteilungsnetzdaten anzuwenden und einen Wert zumindest zum Teil basierend auf der mindestens einen vorgegebenen Regel und den Stromverteilungsnetzdaten zu bestimmen; und
die erste DNNC-Komponente des Weiteren dazu konfiguriert ist, auf den Wert zuzugreifen.

10. System nach Anspruch 1, wobei eine Vielzahl von DNNC-Komponenten, einschließlich der ersten und zweiten DNNC-Komponente dazu konfiguriert sind, mithilfe eines topographischen Systems von Verbindungen zu kommunizieren, welche ein Netzwerk aus DNNC-Komponenten bilden, einschließlich mindestens eines Kommunikationspfades von der ersten DNNC-Komponente zu der zweiten DNNC-Komponente, welche zumindest einen Teil des Netzwerks quert.

11. Verfahren zum Steuern eines Stromverteilungsnetzes, wobei das Verfahren umfasst:
Bereitstellen einer ersten, zweiten und dritten Verteilungsnetzknotensteuerungskomponente (Distribution Network Node Controller, DNNC) (210, 220, 230), die in einer nicht flachen Steuertopographie angeordnet sind,
wobei die erste DNNC-Komponente (210) dazu konfiguriert ist, mit der zweiten DNNC-Komponente (220), mit der dritten DNNC-Komponente (230) und mit mindestens einer Stromverteilungsnetzkomponente zu kommunizieren, um zumindest einen Teil des Stromverteilungsnetzes dynamisch zu steuern,
wobei die zweite DNNC-Komponente (220) dazu konfiguriert ist, mit der ersten DNNC-Komponente (210), mit der dritten DNNC-Komponente (230) und mit mindestens einer Stromverteilungsnetzkomponente zu kommunizieren, um die dynamische Steuerung von zumindest einem Teil des Stromverteilungsnetzes zu bewirken,
Empfangen, an der zweiten DNNC-Komponente (220), von Daten von der ersten DNNC-Komponente (210) und Daten von der dritten DNNC-Komponente (230);
Verarbeiten, an der zweiten DNNC-Komponente (220), der Daten, die von der dritten DNNC-Komponente (230) empfangen werden, auf Basis der Daten, die von der ersten DNNC-Komponente (210) empfangen werden; und
Übertragen der verarbeiteten Daten von der zweiten DNNC-Komponente (220) an die erste DNNC-Komponente (210).

12. Verfahren nach Anspruch 11, wobei die erste DNNC-Komponente, die zweite DNNC-Komponente (220) und die dritte DNNC-Komponente (230) in einer hierarchischen Steuerknotenstruktur angeordnet sind, und die zweite DNNC-Komponente (220) der dritten DNNC-Komponente (230) übergeordnet ist.

13. Verfahren nach Anspruch 11, wobei die erste DNNC-Komponente (210), die zweite DNNC-Komponente (220) und die dritte DNNC-Komponente (230) in einer hierarchischen Steuerknotenstruktur angeordnet sind, und die zweite DNNC-Komponente (220) der ersten DNNC-Komponente (210) untergeordnet ist.

## Revendications

1. Système de commande de distribution électrique associé à un réseau de distribution électrique, le système de commande de distribution électrique comprenant:
un premier, un deuxième et un troisième composants de commande de noeud de réseau de distribution, DNNC (210, 220, 230) disposés dans une topographie de commande non plane,
le premier composant DNNC (210) configuré pour communiquer avec le deuxième composant DNNC (220), avec le troisième composant DNNC (230), et avec au moins un composant de réseau de distribution électrique pour commander de manière dynamique au moins une partie du réseau de distribution électrique,
le deuxième composant DNNC (220) configuré pour communiquer avec le premier composant DNNC (210), avec le troisième composant DNNC (230), et avec au moins un composant de réseau de distribution électrique pour commander de manière dynamique au moins une partie du réseau de distribution électrique,
le deuxième composant DNNC (220) configuré en outre pour traiter les données reçues à partir du troisième composant DNNC (230) sur la base des données reçues à partir du premier composant DNNC (210) et pour transmettre les données traitées au premier composant DNNC (210).

2. Système selon la revendication 1, dans lequel le deuxième composant DNNC (220) est configuré de manière s'interposer en communication entre le premier composant DNNC et le troisième composant DNNC (210, 230), dans lequel le premier composant DNNC (210) communique avec le troisième composant DNNC (230) au moyen du deuxième composant DNNC (220).

3. Système selon la revendication 2, dans lequel le premier composant DNNC (210) est en outre configuré pour communiquer avec un quatrième composant DNNC couplé en communication aux deuxième composant DNNC ou au troisième composant DNNC (220, 230), le quatrième DNNC étant en outre configuré pour communiquer avec au moins un composant du réseau de distribution électrique pour commander de manière dynamique au moins une partie du réseau de distribution électrique.

4. Système selon la revendication 3, dans lequel le premier composant DNNC (210) est en outre configuré pour communiquer avec d'autres composants DNNC, y compris le deuxième, le troisième ou le quatrième composants DNNC (220, 230), disposés, au moins en partie, selon une topologie de structure arborescente.

5. Système selon la revendication 3, dans lequel le premier composant DNNC (210) est en outre configuré pour communiquer avec d'autres composants DNNC, y compris le deuxième, le troisième ou le quatrième composants DNNC (220, 230), disposés, au moins en partie, selon une topologie de structure en treillis.

6. Système selon la revendication 3, dans lequel au moins un composant DNNC parmi le premier, le deuxième, le troisième ou le quatrième composants DNNC comprend en outre:
un composant processeur (620); et
un composant de paquet de capteurs (652), dans lequel le composant processeur et le composant de paquet de capteurs sont couplés en communication et, au moins en partie, configurés pour accéder à des données du réseau de distribution électrique.

7. Système selon la revendication 3, dans lequel au moins un composant DNNC parmi le premier, le deuxième, le troisième ou le quatrième composants DNNC comprend en outre:
un composant d'entrée-sortie (650) couplé en communication à un élément de paquet de communication configurée pour assurer une communication par au moins une modalité de communication prédéterminée facilitant la communication entre deux ou plusieurs composants DNNC.

8. Système selon la revendication 3, dans lequel au moins un composant DNNC parmi le premier, le deuxième, le troisième ou le quatrième composants DNNC comprend en outre:
un composant d'interface réseau-dispositif (640) configuré pour supporter l'interaction avec au moins un composant du réseau de distribution électrique facilitant la commande d'au moins une partie du réseau de distribution électrique.

9. Système selon la revendication 1, dans lequel
le deuxième composant DNNC est en outre configuré pour accéder aux données du réseau de distribution électrique, pour appliquer au moins une règle prédéterminée pour les données du réseau de distribution électrique, et pour déterminer une valeur sur la base, au moins en partie, de ladite au moins une règle prédéterminée et des données du réseau de distribution électrique; et
le premier composant DNNC est en outre configuré pour accéder à la valeur.

10. Système selon la revendication 1, dans lequel une pluralité de composants DNNC, y compris le premier et le deuxième composant DNNC, sont configurés pour communiquer par l'intermédiaire d'un système topographique d'interconnexions formant un réseau de composants DNNC, comprenant au moins un circuit de communication allant du premier composant DNNC au deuxième composant DNNC en traversant au moins une partie du réseau.

11. Procédé de commande d'un réseau de distribution électrique, ledit procédé consistant à:
fournir un premier, un deuxième et un troisième composants de commande de noeud de réseau de distribution, DNNC (210, 220, 230) disposés dans une topographie de commande non plane,
le premier composant DNNC (210) configuré pour communiquer avec le deuxième composant DNNC (220), avec le troisième composant DNNC (230), et avec au moins un composant de réseau de distribution électrique pour commander de manière dynamique au moins une partie du réseau de distribution électrique,
le deuxième composant DNNC (220) étant configuré pour communiquer avec le premier composant DNNC (210), avec le troisième composant DNNC (230), et avec au moins un composant de réseau de distribution électrique pour commander de manière dynamique au moins une partie du réseau de distribution électrique,
recevoir, au niveau du deuxième composant DNNC (220), des données provenant du premier composant DNNC (210) et des données provenant du troisième composant DNNC (230);
traiter, au niveau du deuxième composant DNNC (220), les données provenant du troisième composant DNNC (230), sur la base des données provenant du premier composant DNNC (210); et
transmettre les données traitées, du deuxième composant DNNC (220) au premier composant DNNC (210.

12. Procédé selon la revendication 11, dans lequel le premier composant DNNC, le deuxième composant DNNC (220) et le troisième composant DNNC (230) sont disposés dans une structure de noeud de commande hiérarchique, et le deuxième composant DNNC (220) est un parent du troisième composant DNNC (230).

13. Procédé selon la revendication 11, dans lequel le premier composant DNNC, le deuxième composant DNNC (220) et le troisième composant DNNC (230) sont disposés dans une structure de noeud de commande hiérarchique, et le deuxième composant DNNC (220) est un enfant du premier composant DNNC (230).
